# EUROPEAN PATENT APPLICATION

(11) **EP 4 202 812 A1**
(43) Date of publication of application: **28.06.2023**
(21) Application number: 21871487.1
(22) Date of filing: 22.09.2021
(51) Int. Cl.: G06Q 10/08, G07C 9/00

(54) **UNITISED SPACE MANAGEMENT METHOD FOR SEPARATING TRANSPORTATION RIGHTS AND USAGE RIGHTS**

(30) Priority: 27.09.2020 CN 202011035766
(71) Applicant: Changsha Xingshen Intelligent Technology Co., Ltd, Changsha, Hunan 410000 (CN)
(72) Inventor: AN, Xiangjing, Changsha, Hunan 410000 (CN)
(74) Representative: Behr, Wolfgang
(86) International application number: PCT/CN2021/119579
(87) International publication number: WO 2022/063117

(57) **Abstract**

A unitized space management method for separating transportation rights and usage rights, comprising: each unitized space is used as a standard goods container, and an electronic tag is used to mark the usage rights of each unitized space container; a logistics vehicle is used as the transport carrier of the unitized space to implement the logistical transport of the unitized space; during the logistical transport process of the unitized space by the logistics vehicle, the unitized space is located on a transport vehicle and is in a locked state under the control of the owner; after the logistics vehicle transports the unitized space to a designated target destination, the unitized space may or may not be separated from the logistics vehicle and, under the control of the owner of the unitized space, comparison verification of the electronic tag is used to implement usage of the unitized space and exercise the usage rights of the unitized space, for example picking up or placing items stored in the unitized space. The present method has the advantages of higher efficiency, a wider range of application, and better security.

## Description

### Cross-reference of Related Application

This application is based on and claims priority to Chinese Invention Application No. 202011035766.5, entitled "Unitized Space Management Method Separating Transport Right from Usage Right", filed on September 27, 2020, which is incorporated as one part of this application by reference in its entirety.

### BACKGROUND OF THE INVENTION

### 1. Technical Field

The invention mainly relates to the logistics field, and particularly provides a unitized space management method separating the transport right from the usage right to realize the management of transport, transfer, use, sharing, combination, temporary storage, disposal, and the like.

### 2. Description of Related Art

With the continuous development of logistics and express delivery, the quantity of commodities transferred by logistics increases year by year, and logistics transportation has gradually become a life style of people and a sales method of merchants.

Traditionally, the ownership and the transport right are inseparable in the logistics industry, that is, transport vehicles and containers for containing commodities belong to the same logistics provider. Commodities are collected by the logistics provider, sorted one by one or multiple times and are then placed in the containers, and then the containers are transported by means of vehicles of the logistics provider until the commodities are transferred to the destination and delivered to the recipients. At present, delivery is completed by delivery men, who collect to-be-delivered commodities one by one from different locations or collect all to-be-delivered commodities at a multi-stage delivery terminal through containers on a vehicle, and then place the commodities in the containers for transportation.

The above delivery method has the following defects:
1. The containers and the transport vehicles belong to the same logistics provider, so once commodities are placed in the containers, the security of the commodities will no longer be under the control of the owners of the commodities and completely depends on the integrity of the logistics provider.
2. The key and crucial task of logistics providers should be transportation with vehicles rather than commodity collection and deposit, so the existing delivery method makes the delivery efficiency of the logistics providers low.
3. In case of online shopping, the commodities of customers will not be transported until the ownership of the commodities is changed, as required by the traditional delivery method, so the commodities have to be sorted, transferred and even delivered multiple times on the side of electronic merchants before being delivered to the buyers, thus leading to resource waste and greatly reducing the delivery efficiency.
4. In case of unmanned logistics, the containers are distributed by an unmanned transfer platform, the greatest advantage of which is long-term and continuous operation, so repeated sorting of commodities and repeated picking and placing of commodities in different containers greatly limit the development of unmanned logistics.
5. At present, the electronic merchants are responsible for packaging and transport management after pasting an electronic sheet, so the recipient and the destination should be specified before transportation, that is, transportation (the last time of transportation) should be performed after the ownership of commodities is changed.

### BRIEF SUMMARY OF THE INVENTION

In view of the technical problems of the prior art, the technical issue to be settled by the invention is to provide a unitized space management method separating the transport right from the usage right, which is higher in efficiency, wider in application range, and better in security.

To solve the aforesaid problems, the following technical solutions can be adopted:

A unitized space management method separating the transport right from the usage right, comprising:
using a container with a unique ID as an unitized space for storing commodity, and opening or closing the container by comparison of electronic information records and action of a controlled mechanism; locking the container on a transport carrier or separating the container from the transport carrier by comparison of the electronic information records and action of the controlled mechanism;
applying for, by a user, the usage right of a certain size of the unitized space of one specification, and under the condition that an application is approved, granting an applicant with the usage right of the container by means of an electronic information record, and the applicant obtains the usage right of the container;
granting a transport contractor only with the transport right of the container when the container is stored and transported by means of transport equipment, wherein in the transport process, the container is in a closed state under the control of the user; and
terminating the transport right of the transport contractor when the transport contractor transports the container to a designated destination as required by the user, and opening, by the user, the container by comparing electronic information, that is, by exercising the usage right of the unitized space.

As further improvement of the above technical solution: the user obtaining the usage right of the container places the commodity in the container, and controls or transfers the usage right of the container by changing the electronic information, to achieve the transfer of ownership or disposal right of the commodity in the container.

As further improvement of the above technical solution: when a commodity is selected or purchased directly through an electronic platform, the commodity is placed in the container after being sorted in a distribution warehouse, an electronic tag of the container becomes a marker of the owner of the commodity, and the owner of the commodity obtains the ownership of the commodity by obtaining the usage right of the container.

As further improvement of the above technical solution: directly placing the commodity, after being sorted primary, in the container according to destination information, and the container is directly sent to the owner of the commodity according to the destination information.

As further improvement of the above technical solution: in case of in-transit sales of a manufacture, the manufacturer is the user of the container, a logistics vehicle is the carrier possessing the transport right, the manufacturer possess the transport right of the container and does not possess the usage right of the container, and the manufacturer stores commodities in the containers with an independent usage right.
the manufacturer completes "in-transit storage" by means of the usage right of the containers, that is, the manufacturer stores the commodities in the containers with the independent usage right by means of big data or a cloud information stream, and the commodities are transferred and delivered by means of the logistics vehicle in a "no absolute destination" manner, such that the commodities are sold finally.

As further improvement of the above technical solution: a whole logistic system comprises the independent transport contractor and an independent space management operator, that is, all logistics vehicles used as transport carriers belong to the independent transport contractor, and all the containers belong to the independent space management operator.

As further improvement of the above technical solution: the containers are public platform units, and the owners of commodities stored in the containers become the users of the containers after completing a logistics commission.

As further improvement of the above technical solution: the logistics vehicles are manned vehicles, or unmanned smart systems, the transport contractor possesses the ownership of the manned vehicles and/or the unmanned smart systems, and the containers belongs to the owners of commodities or the space management operator in the logistics system.

As further improvement of the above technical solution: each container has a unique electronic tag for identity recognition, the logistics vehicles recognize the containers according to the electronic tags and complete the transport, and the user of each container controls the container according to the electronic tag of the container.

As further improvement of the above technical solution: the container is controlled as follows:
(a) once the logistics vehicle has completed the locking of the container, the user of the container controls the lock state of the logistic vehicle and the container according to the electronic tag;
(b) the container is separated from the logistics vehicle under the control of the user of the container;
(c) the container is opened or locked under the control of the user of the container.

As further improvement of the above technical solution: the user of the container exercises or transfers the usage right of the container through internet or an APP.

As further improvement of the above technical solution: in-transit flexible management of each commodity is realized through in-transit dynamic management of each container; and the usage right of the containers used as unitized spaces is managed by the space management operator, and the transport right of the containers is managed by the transport contractor.

Compared with the prior art, the invention has the following advantages: according to the unitized space management method separating the transport right from the usage right, each container is used as a standard commodity storage unit, and the usage right of each container is marked with an electronic tag; the containers are transported by using logistics vehicles or other vehicles as transport carriers, wherein in the process of transporting the containers by means of the logistics vehicles, the containers are located on the transport carriers and are in a locked state under the control of a transport contractor; when the logistics vehicles transport the containers to a designated destination, the containers are separated from the logistics vehicles, and the containers are opened or locked by comparing and verifying the electronic tags under the control of the user of the containers. In this way, all the containers are delivered by means of the carriers such as the logistics vehicles with the independent transport right, re-sorting is not needed, the overall transport efficiency is improved, and the idling cost is reduced. Each commodity (or the combination of commodities) is assigned with a unique ID and is placed in a unitized space with a unique ID, such that each commodity can be dynamically and flexibly managed in the whole process, and more flexible and accurate commodity management can be fulfilled.

### BRIEF DESCRIPTION OF THE SEVERAL VIEWS OF THE DRAWINGS

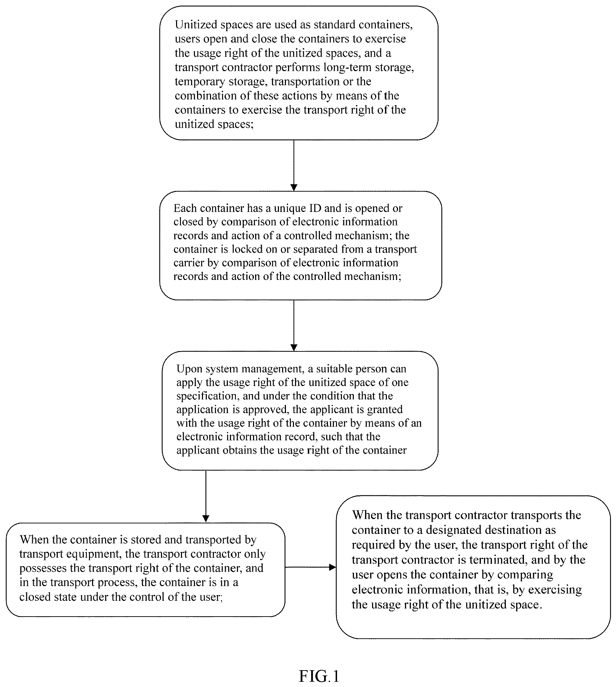

FIG. 1 is a flow diagram of a method provided by the invention.

### DETAILED DESCRIPTION OF THE INVENTION

The invention will be described in further detail below in conjunction with the accompanying drawings and specific embodiments.

As shown in FIG. 1, the invention provides a unitized space management method separating the transport right from the usage right, which comprises:
Using containers as standard commodity storage units, and marking the usage right of each container with an electronic tag;
Transporting the containers by using logistics vehicles or other vehicles as transport carriers of the containers, wherein in the process of transporting the containers by means of the logistics vehicles, the containers are located on the logistic vehicles and are in a locked state under the control of a transport contractor; and
When the logistics vehicles transport the containers to a designated destination, separating the containers from the logistics vehicles, and opening or locking the containers by comparing and verifying the electronic tags under the control of the user of the containers.

In a specific application example, after a commodity is placed in one container, the owner of the commodity becomes the user of the container.

In a specific application example, the containers are cargo cabinets, cargo boxes, or other structures.

The invention has the advantage that, by separating the usage right from the transport right, the transfer time of the ownership (disposal right) of commodities in the containers is separated from the transport time, so the commodities can be delivered in advance before a transaction is concluded. The core of the invention is that transportation can be started without a specified destination, and through a unique ID management database and a transport management database of unitized spaces, the transport management and usage right management of commodities are separated.

With electronic shopping as an example, when a commodity is selected or purchased directly through an electronic platform, the commodity is placed in the container after being sorted in a distribution warehouse (logistics warehouse), the electronic tag of the container becomes a marker of the owner of the commodity, and the owner of the commodity obtains the ownership of the commodity by obtaining the usage right of the container. In this way, all the containers are delivered by means of logistics vehicles with an independent transport right, re-sorting is not needed, the overall transport efficiency is improved, and the idling cost is reduced.

In a preferred embodiment, after being sorted, the commodity is directly placed in the container according to destination information, and the container is directly sent to the owner of the commodity according to the destination information, such that an intermediate link is omitted.

For example, in case of in-transit sales of a manufacture, the manufacturer is the user of the container, the logistics vehicle is a carrier possessing the transport right, the manufacturer possess the transport right of the container and does not possess the usage right of the container, and the manufacturer stores commodities in the containers with an independent usage right. In this way, the manufacturer can realize "in-transit storage" through this method, that is, the manufacturer stores the commodities in the containers with the independent usage right by means of big data or a cloud information stream, and the commodities are transferred and delivered by means of the logistics vehicle in a "no absolute destination" manner, such that the commodities are sold finally. The concept "no absolute destination" includes "no destination when commodities are stored/loaded on vehicles", "change of the destination in transit", and the like.

In a specific application example, a whole logistic system comprises the independent transport contractor and an independent space management operator, that is, all logistics vehicles used as transport carriers belong to the independent transport contractor, and all the containers belong to the independent space management operator. It can be understood that the containers are common platform units, and the owners of commodities stored in the containers become users of the containers after completing a logistics commission.

In a specific application example, the logistics vehicles may be manned vehicles, or unmanned smart systems (such as unmanned vehicles) as actually needed, the transport contractor possesses the ownership of the manned vehicles and/or the unmanned smart systems, and the owners of the commodities or the space management operator in the logistics system possess the usage right of the containers.

In a specific application example, each container has a unique electronic tag for identity recognition, the logistics vehicles recognize and transport the containers according to the electronic tags, and the user of each container controls the container according to the electronic tag of the container. Specifically:
After the logistics vehicle locks the container, the user of the container controls the lock state of the logistic vehicle and the container according to the electronic tag
The container is separated from the logistics vehicle under the control of the user of the container.

The container is opened or locked under the control of the user of the container
In a specific application example, the user of the container exercises or transfers the usage right of the container through internet or an APP.

The above embodiments are merely preferred ones of the invention, and the protection scope of the invention is not limited to the above embodiments. All technical solutions obtained based on the concept of the invention should fall within the protection scope of the invention. It should be pointed out that various improvements and modifications made by those ordinarily skilled in the art without departing from the principle of the invention should fall within the protection scope of the invention.

## Claims

1. A unitized space management method separating the transport right from the usage right, **characterized in that** comprising:
using a container with a unique ID as an unitized space for storing commodity, and opening or closing the container by comparison of electronic information records and action of a controlled mechanism; locking the container on a transport carrier or separating the container from the transport carrier by comparison of the electronic information records and action of the controlled mechanism;
applying for, by a user, the usage right of a certain size of the unitized space of one specification, and under the condition that an application is approved, granting an applicant with the usage right of the container by means of an electronic information record, and the applicant obtains the usage right of the container;
granting a transport contractor only with the transport right of the container when the container is stored and transported by means of transport equipment, wherein in the transport process, the container is in a closed state under the control of the user; and
terminating the transport right of the transport contractor when the transport contractor transports the container to a designated destination as required by the user, and opening, by the user, the container by comparing electronic information, that is, by exercising the usage right of the unitized space.

2. The unitized space management method separating the transport right from the usage right according to claim 1, **characterized in that** the user obtaining the usage right of the container places the commodity in the container, and controls or transfers the usage right of the container by changing the electronic information, to achieve the transfer of ownership or disposal right of the commodity in the container.

3. The unitized space management method separating the transport right from the usage right according to claim 1, **characterized in that** when a commodity is selected or purchased directly through an electronic platform, the commodity is placed in the container after being sorted in a distribution warehouse, an electronic tag of the container becomes a marker of the owner of the commodity, and the owner of the commodity obtains the ownership of the commodity by obtaining the usage right of the container.

4. The unitized space management method separating the transport right from the usage right according to claim 3, **characterized in that** directly placing the commodity, after being sorted primary, in the container according to destination information, and the container is directly sent to the owner of the commodity according to the destination information.

5. The unitized space management method separating the transport right from the usage right according to claim 1, **characterized in that** in case of in-transit sales of a manufacture, the manufacturer is the user of the container, a logistics vehicle is the carrier possessing the transport right, the manufacturer possess the transport right of the container and does not possess the usage right of the container, and the manufacturer stores commodities in the containers with an independent usage right.

6. The unitized space management method separating the transport right from the usage right according to claim 5, **characterized in that** the manufacturer completes "in-transit storage" by means of the usage right of the containers, that is, the manufacturer stores the commodities in the containers with the independent usage right by means of big data or a cloud information stream, and the commodities are transferred and delivered by means of the logistics vehicle in a "no absolute destination" manner, such that the commodities are sold finally.

7. The unitized space management method separating the transport right from the usage right according to any one of claims 1-6, **characterized in that** a whole logistic system comprises the independent transport contractor and an independent space management operator, that is, all logistics vehicles used as transport carriers belong to the independent transport contractor, and all the containers belong to the independent space management operator.

8. The unitized space management method separating the transport right from the usage right according to any one of claims 1-6, **characterized in that** the containers are public platform units, and the owners of commodities stored in the containers become the users of the containers after completing a logistics commission.

9. The unitized space management method separating the transport right from the usage right according to any one of claims 1-6, **characterized in that** the logistics vehicles are manned vehicles, or unmanned smart systems, the transport contractor possesses the ownership of the manned vehicles and/or the unmanned smart systems, and the containers belongs to the owners of commodities or the space management operator in the logistics system.

10. The unitized space management method separating the transport right from the usage right according to any one of claims 1-6, **characterized in that** each container has a unique electronic tag for identity recognition, the logistics vehicles recognize the containers according to the electronic tags and complete the transport, and the user of each container controls the container according to the electronic tag of the container.

11. The unitized space management method separating the transport right from the usage right according to claim 10, **characterized in that** the container is controlled as follows:
(a) once the logistics vehicle has completed the locking of the container, the user of the container controls the lock state of the logistic vehicle and the container according to the electronic tag;
(b) the container is separated from the logistics vehicle under the control of the user of the container;
(c) the container is opened or locked under the control of the user of the container.

12. The unitized space management method separating the transport right from the usage right according to any one of claims 1-6, **characterized in that** the user of the container exercises or transfers the usage right of the container through internet or an APP.

13. The unitized space management method separating the transport right from the usage right according to any one of claims 1-6, **characterized in that** in-transit flexible management of each commodity is realized through in-transit dynamic management of each container; and the usage right of the containers used as unitized spaces is managed by the space management operator, and the transport right of the containers is managed by the transport contractor.
